# EUROPEAN PATENT SPECIFICATION

(11) **EP 3 369 232 B1**
(45) Date of publication and mention of the grant of the patent: **15.04.2020**
(21) Application number: 16790492.9
(22) Date of filing: 19.10.2016
(51) Int. Cl.: H04L 29/06

(54) **DETECTION OF CYBER THREATS AGAINST CLOUD-BASED APPLICATIONS**
DETEKTION VON CYBER-BEDROHUNGEN GEGEN CLOUD-BASIERTE ANWENDUNGEN
DÉTECTION DE CYBERMENACES CONTRE DES APPLICATIONS NUAGIQUES

(30) Priority: 26.10.2015 US 201562246399 P; 26.01.2016 US 201615006695
(43) Date of publication of application: 05.09.2018
(73) Proprietor: Microsoft Technology Licensing LLC, Redmond, Washington 98052-6399 (US)
(72) Inventor: MOST, Yonatan, Redmond, Washington 98052-6399 (US); COSTICA, Yinon, Redmond, Washington 98052-6399 (US); LUTTWAK, Ami, Redmond, Washington 98052-6399 (US)
(74) Representative: Grünecker Patent- und Rechtsanwälte PartG mbB
(86) International application number: PCT/US2016/057567
(87) International publication number: WO 2017/074747

(56) References cited:
- WO-A2-2012/166944
- US-A1- 2011 167 474
- US-B1- 8 230 505

## Description

### TECHNICAL FIELD

The disclosure generally relates to a system and method for protecting cloud services, and more specifically to a system and method for cloud service risk analysis and cyber threat detection.

### BACKGROUND

In recent years, more providers have begun offering the ability to create computing environments in the cloud. For example, in 2006, Amazon Web Services™ (also known as AWS) launched a service that provides users with the ability to configure an entire environment tailored to an application executed over a cloud platform. In general, such services allow for developing scalable applications in which computing resources are utilized to support efficient execution of the application.
Additionally, WO 2012/166944 A2 shows systems and methods providing services and mechanisms to online operators for gathering information about individuals the operators may engage in transaction activities with as well as ensuring certain protections are maintained with regard to these transaction activities. In particular embodiments, the systems and methods provide services and mechanisms such as the non-limiting examples of user registration, user verification, user validation, user self-exclusion, unique identifiers across multiple websites, session identifiers and/or certificate control features, underage controls, jurisdiction controls, compulsive behavior controls, chargeback controls, clearance and settlement functions, and tax identification and collection mechanisms.

Organizations and businesses that develop, provide, or otherwise maintain cloud-based applications have become accustomed to relying on these services and implementing various types of environments from complex websites to applications and services provided as software-as-a-service (SaaS) delivery model. Such services and applications are collectively referred to as "cloud-based applications."

Cloud-based applications are typically accessed by users using a client device via a web browser. Cloud-based applications include, among others, e-commerce applications, social media applications, enterprise applications, gaming applications, media sharing applications, storage applications, software development applications, and so on. Many individual users, businesses, and enterprises turn to cloud-based applications in lieu of "traditional" software applications that are
locally installed and managed. For example, an enterprise can use Office® 365 online services for email accounts, rather than having an Exchange® Server maintained by the enterprise.

As greater reliance is made on cloud-based applications, the access to such applications from a client device using, for example, a web browser, a mobile application, a desktop native client, etc., should be completely secured. For example, for an e-commerce application executed in a cloud-based platform, any unauthorized access and/or data breach must be prevented.

Providers of cloud computing platforms (e.g., Amazon®) offer various security capabilities primary designed to protect their infrastructure against cyber-attacks (e.g., DOS, DDoS, etc.). However, cloud computing platforms are not designed to detect all unauthorized and/or unsecured access to cloud-based applications hosted therein.

Furthermore, cyber-attacks by hackers who gain unauthorized access can occur in multiple ways. Solutions for detecting such access need to be adaptable to detect and evaluate the threat level of access and actions being requested by potential attackers. Thus, current cloud computing platforms are also unable to evaluate a threat level of the unauthorized and/or unsecured access.

It would therefore be advantageous to provide a solution that overcomes the deficiencies noted above by providing secured access control to cloud-based applications.

### SUMMARY

The scope of the invention is defined by the independent claims. This Summary is provided to introduce a selection of concepts in a simplified form that are further described below in the Detailed Description. This Summary is not intended to identify key features or essential features of the claimed embodiments, nor is it intended to be used to limit the scope of the various claimed embodiments. Moreover, sole purpose of this Summary is to present some concepts of one or more embodiments in a simplified form as a prelude to the more detailed description that is presented later. For convenience, the term "some embodiments" or "various embodiments" may be used herein to refer to a single embodiment or multiple embodiments of the disclosure

Various embodiments disclosed herein include a method detecting cyber threats against a cloud-based application. The method comprises receiving a request from a client device, the request directed to a cloud-based application computing platform, wherein the client device is associated with a user attempting to access the cloud-based application; determining whether the received request belongs to a current session of the client device accessing the cloud-based application; extracting, from the received request, at least one application-layer parameter of the current session; comparing the at least one extracted application-layer parameter to application-layer parameters extracted from previous sessions to determine at least one risk factor; and computing a risk score based on the determined at least one risk factor, wherein the risk score is indicative of a potential cyber threat.

Various embodiments disclosed herein further include a proxy device for detecting cyber threats against a cloud-based application. The proxy device comprises a processing system; and a memory, the memory containing instructions that, when executed by the processor, configure the proxy device to: receive a request from client device to a cloud-based application computing platform, wherein the client device is associated with a user attempting to access the cloud-based application; determine whether the received request belongs to a current session of the client device accessing the cloud-based application; extract, from the received request, at least one application-layer parameter of the current session; compare the at least one extracted application-layer parameter to application-layer parameters extracted from previous sessions to determine at least one risk factor; and compute a risk score based on the determined at least one risk factor, wherein the risk score is indicative of a potential cyber threat.

Various embodiments disclosed herein further include a cloud computing platform comprising at least one server configured to host at least one cloud-based application; and a device communicatively connected to the at least one server, wherein the device includes a processor; and a memory, the memory containing instructions that, when executed by the processing system, configure the device to detect cyber threats against a cloud-based application, wherein the device is further configured to: receive a request from client device to a cloud-based application computing platform, wherein the client device is associated with a user attempting to access the cloud-based application; determine whether the received request belongs to a current session of the at least one client device accessing the cloud-based application; extract, from the received request, at least one application-layer parameter of the current session; compare the at least one extracted application-layer parameter to application-layer parameters extracted from previous sessions to determine at least one risk factor; and compute a risk score based on the determined at least one risk factor, wherein the risk score is indicative of a potential cyber threat.

### BRIEF DESCRIPTION OF THE DRAWINGS

The subject matter disclosed herein is particularly pointed out and distinctly claimed in the claims at the conclusion of the specification. The foregoing and other objects, features and advantages of the disclosed embodiments will be apparent from the following detailed description taken in conjunction with the accompanying drawings.
Figure 1 is a network system utilized to describe the various disclosed embodiments.
Figure 2 is a block diagram of a managed network proxy according to an embodiment.
Figure 3 is a flowchart illustrating a method for detecting cyber threats against cloud-based applications according to an embodiment.
Figure 4 is a flowchart illustrating a method for computing a risk score according to one embodiment.

### DETAILED DESCRIPTION

It is important to note that the embodiments disclosed herein are only examples of the many advantageous uses of the innovative teachings herein. In general, statements made in the specification of the present application do not necessarily limit any of the various claimed embodiments. Moreover, some statements may apply to some inventive features but not to others. In general, unless otherwise indicated, singular elements may be in plural and vice versa with no loss of generality. In the drawings, like numerals refer to like parts through several views.

According to some exemplary embodiments, techniques for detecting cyber threats against cloud-based applications are provided. The detection is based, in part, on analysis of application-layer attributes detected in a current user session in comparison to previous security sessions. Based on the analysis, risk factors are detected and a risk factor is computed respective thereof. The analysis of application-layer activity, such as accessing a cloud-based application or performing certain applications in the cloud-based application, allows for performance of a mitigation action when a risk score computed during the current session indicates a cyber threat. According to some exemplary and non-limiting embodiments, the cyber-threats that can be detected and potentially mitigated include an access to the cloud-based application using stolen user credentials, a rough insider leaking data from the cloud-based application, access to the cloud-based application using common credentials, and so on.

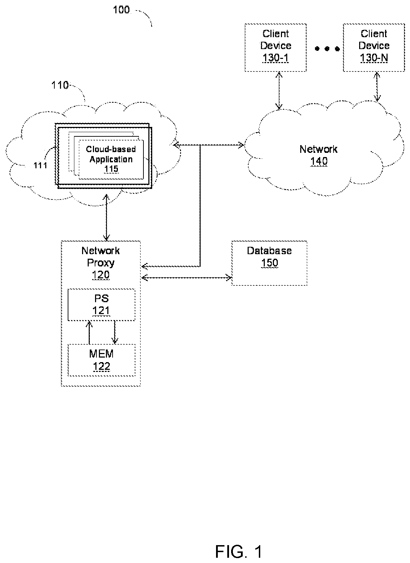

Fig. 1 is an exemplary and non-limiting network system 100 utilized to describe the various disclosed embodiments. The network system 100 includes a cloud computing platform 110 which may be, but is not limited to, a private cloud, a public cloud, or a hybrid cloud providing cloud computing resources to applications or services executed therein. In an embodiment, the cloud computing platform 110 may be a software-as-a-service (SaaS) platform.

The cloud computing platform 110 includes a plurality of servers 111 configured to execute a plurality of cloud-based applications 115. Each cloud-based application 115 may be, but is not limited to, an e-commerce application, a social media application, an enterprise application, a gaming application, a media sharing application, a storage application, a software development application, and so on. The cloud-based applications 115 may be communicatively connected to a plurality of client devices 130-1 through 130-N (hereinafter referred to individually as a client device 130 and collectively as client devices 130, merely for simplicity purposes) through a network 140.

The network 140 may be, for example, a wide area network (WAN), a local area network (LAN), the Internet, and the like. Each of the client devices 130 may include, for example, a personal computer, a laptop, a tablet computer, a smartphone, a wearable computing device, or any other computing device. The client devices 130 can access the cloud-based applications 115 executed in the cloud computing platform 110.

The cloud computing platform 110 is further communicatively connected to a managed network proxy 120. The managed network proxy 120 is configured to secure traffic and activities in the cloud computing platform 110. Specifically, the managed network proxy 120 can be configured to intercept, monitor, modify, and forward network communications traffic between the client devices 130 and the cloud computing platform 110. To this end, the managed network proxy 120 is configured to receive or intercept traffic between the client devices 130 to the cloud computing platform 110. The traffic may include a request to access a cloud-based application 115, a request to perform an action in a cloud-based application 115, and so on. The request to a cloud-application 115 is typically an application-layer request (a request sent by means of an application-layer protocol). Examples for an application-layer protocol include HTTP, SSL, FTP, IMAP, POP, and the like.

The managed network proxy 120 is also configured to analyze the received traffic to detect one or more application-layer parameters and actions performed by a particular user of a client device 130 during a session. Based, in part, on the detected application-layer parameters and actions, a risk score is generated for each session. The generation of the risk score may be computed based on information detected across a plurality of cloud-applications 115 accessed by the user. A session may be, for example, a sequence of actions performed by a single user during an uninterrupted period of activity by that user. A sequence of actions may be identified as a session when, for example, the sequence of actions is performed within a particular time period, the sequence of actions occurs between two designated events (such as, but not limited to, logging in to and logging out of a user account), when a specific number of actions occurs, and so on. In one embodiment, based on the risk score and the analysis of received or intercepted traffic, the proxy 120 is configured to generate profiles of users using the cloud-based applications 115.

In an embodiment, the managed network proxy 120 is configured to detect, based on the risk score generated for a session, a cyber threat against one or more cloud-based applications 115 and/or against the infrastructure of the cloud computing platform 110.

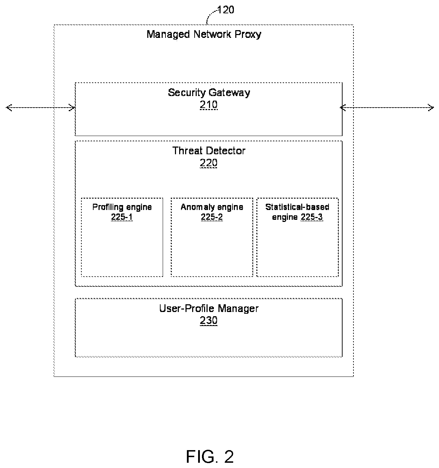

In a further embodiment, the managed network proxy 120 is also configured to perform one or more mitigation actions against detected cyber threats. Examples for such mitigation actions include, for example, sending notifications regarding suspicious network traffic and behavior, blocking cyber threats, performing application controls, filtering URLs, performing malware protection on the network traffic, providing visibility to application layer parameters (e.g., lists of users, devices, locations, etc.), providing alerts about specific events, updating previously provided alerts based on newly detected events, generating audit logs, and so on, in response to detected cyber threats. The operation of the managed network proxy 120 is further discussed in Fig. 2.

The managed network proxy 120 may be further communicatively connected to a database 150. The managed network proxy 120 may be configured to store user information in the database 150 respective of cyber threat detection and analysis. Such information may include, but not limited to, user profiles.

In an embodiment, the managed network proxy 120 includes a processing system 121 coupled to a memory (MEM) 122. The memory 122 contains instructions that, when executed by the processing system 121, configures the managed network proxy 120 to perform the embodiments disclosed herein. The processing system 121 may be realized by one or more hardware logic components and circuits. For example, and without limitation, illustrative types of hardware logic components that can be used include Field Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), general-purpose microprocessors, microcontrollers, digital signal processors (DSPs), and the like, or any other hardware logic components that can perform calculations or other manipulations of information.

The processing system 121 may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

It should be understood that the embodiments disclosed herein are not limited to the specific architecture illustrated in Fig. 1 and other architectures may be equally used without departing from the scope of the disclosed embodiments. Specifically, the managed network proxy 120 may reside in the cloud computing platform 110, a different cloud computing platform or datacenter connectable. Moreover, in an embodiment, there may be a plurality of managed network proxies 120 operating as described hereinabove and configured to either have one as a standby proxy to take control in a case of failure, or to share the load between them, or to split the functions between them. Furthermore, without departing from the scope of the disclosed embodiments, various functions of the managed network proxy 120 may be implemented by the servers 111.

Fig. 2 is an exemplary and non-limiting block diagram of a managed network proxy 120 according to an embodiment. The managed network proxy 120 includes a security gateway 210, a threat detector 220, and a user-profile manager 230.

In an embodiment, the security gateway 210 is configured to receive or intercept user traffic delivered between any of the client devices 130 and the cloud-computing platform 110. For example, such traffic can be forwarded from the computing platform 110 or tapped in the connection between the client devices 130 and the cloud computing platform 110. The security gateway 210 is configured to extract application layer parameters related to the user traffic. Such application layer parameters may include, but are not limited to, a device type of a client device 130, an operating system type and version, an agent type, and so on. An agent may be, but is not limited to, a software code that is installed in a memory of the client device 130 and executed by a processing unit of the client device 130. An agent type may be, but is not limited to, a locally installed application, a web browser, and so on. In an embodiment, the security gateway 210 is configured to extract information indicating the location of each client device 130. The location information can indicate the physical/geographic location and/or the logical location of each client device 130 with respect to the network 140.

In an embodiment, the security gateway 210 may be configured to extract parameters related to an action being taken by a user of a client device 130 such as, but not limited to, logging in to a cloud-based application 115, downloading or uploading a file, and so on. In another embodiment, the security gateway 210 is also configured to extract parameters relating to an identity of a user of the client device 130, the time at which the action was taken, and/or the bandwidth consumed by the action. The identification of the user can be based on an International Mobile Equipment Identity (IMEI), a phone number, a media access control (MAC) address, an email address, an Internet protocol (IP) address, or any other uniquely identifying information.

The identification of the client device 130 can be stored in connection with an access history of the client device 130 such that individual cloud sessions can be associated with the client device 130 used for that session. As noted above, a session may be, for example, a sequence of actions performed by a single user during an uninterrupted period of activity by that user. A sequence of actions may be identified as a session when, for example, the sequence of actions is performed within a particular time period, the sequence of actions occurs between two designated events (such as, but not limited to, logging in to and logging out of a user account), when a specific number of actions occurs, and so on. In an embodiment, the security gateway 210 is further configured to identify individual sessions in which a client device 130 accesses the cloud-based application 115. For example, each login attempt and any other actions performed by a user within a predetermined time period may be identified as an individual session.

The client device 130 identification information can be tracked across multiple user sessions and/or across multiple cloud-applications. The identification information may be stored in a database (e.g., the database 150) in connection with the associated user profile. Subsequent queries can then be executed to determine which client device 130 was used by a given user to access a given cloud service in a single session or across multiple sessions.

The various parameters extracted or derived by the security gateway 210 are provided to the threat detector 220. In another embodiment, the threat detector 220 can also receive input from a knowledge base (not shown). Such an input may include other information such as, but not limited to, information about specific cyber threats, information for determining risk scores for potential cyber threats, and so on. It should be noted that, in an embodiment, the threat detector 220 can be included as a component of the security gateway 210. In another embodiment, the threat detector 220 can be a separate component which is communicatively connected to the security gateway 210.

The threat detector 220 may include a plurality of analysis engines. In the non-limiting configuration illustrated in Fig. 2, the analysis engines are a profiling engine 225-1, an anomaly engine 225-2, and a statistical-based engine 225-3. Each engine 225-1, 225-2, and 225-3 can be configured to receive any or all of the application-layer, action, and/or user identifier parameters described above. Each engine 225-1, 225-2, and 225-3 can also be configured to receive input derived from the other engines 225.

In an embodiment, the statistical-based anomaly engine 225-3 can be configured to make threat assessments based on a combination of short-term and/or long-term statistical information.

In an embodiment, the anomaly engine 225-2 is configured to detect a specific anomalous operation, a series of anomalous operations, and/or a pattern of anomalous operations. To this end, the anomaly engine 225-2 is configured to determine whether a specific operation performed by a client device 130 or by the cloud computing platform 110 is anomalous based on activity that is abnormal such as, but not limited to, a specific operation being performed more frequently than expected, the operation being performed in an unusual location for the user, the operation being performed from an unusual ISP, the operation being performed by an unusual user-agent for a particular user, the operation including one or more unusual actions for a user, attempting to access the same account from two different locations simultaneously or near-simultaneously, any combinations thereof, and so on.

An operation may be performed more frequently than expected when the operation is performed more often than would be predicted by historical data acquired over a learning time (e.g., if the historical data indicates that a particular operation occurs once a day, multiple occurrences of the operation in a single day would be considered suspicious).

In an embodiment, the anomaly engine 225-2 can also be configured to determine whether a sequence of operations by the user is anomalous. In a further embodiment, a particular operation (or repetitions thereof) alone may not be anomalous. However, when that operation is performed in sequence with another operation, the set of operations may be considered anomalous. For example, the anomaly engine 225-2 can be configured to determine that a sequence of operations is anomalous where the sequence includes authentication followed by transferring files from the cloud computing platform 110 to the client device 130.

In an embodiment, the anomaly engine 225-2 can also be configured to determine whether a pattern of non-sequential operations is anomalous. In a further embodiment, the anomaly engine 225-2 can be configured to examine actions taken out of sequence over specific periods of time. The anomalous nature of individual operations, sequences of operations, and patterns of operations, can be determined based on any of the parameters described herein.

Anomalous activity can be detected based on comparing one or more parameters to previously stored profile information. Such profile information may include, but is not limited to, location, time (hour of the day, day of the week, etc.), device usage, user-agent (type and version), frequency of actions/requests, type of actions performed, order of actions performed, type of information accessed, traffic bandwidth, session characteristics (length, idle time, etc.), and/or HTTP requests characteristics (which resources are accessed, methods, headers, capitalization, etc.). In an embodiment, activity may be determined to be anomalous if the activity differs from previously stored profile information above a predefined threshold.

In an embodiment, if anomalous activity is detected, the threat detector 220 begins risk score computation. The risk score computation is performed in part using the profiling engine 225-1. To this end, profiling engine 225-1 is configured to use intercepted credentials to identify the current user. The profiling engine 225-1is configured to perform organization and user profiling based on passive traffic recordings to establish characteristics that may include, but are not limited to, organization hierarchy and behavior; single user usage patterns; company roles, administrators, managers and different departments; company locations, different branches and office locations, and/or home locations of employees; distributions of user activities over specific time periods; and user daily routines including, but not limited to, daily locations, activity times, applications, and usage patterns. Such organization and profiling may be utilized to, for example, determine whether an activity is anomalous and, thus, a potential threat. That is, in an exemplary embodiment, current activity may be compared to activity stored in a profile created by the user-profile manager 230 to determine whether the current activity is unusual. In an embodiment, the organization and profiling information may be utilized by the threat detector 220 as described further herein below.

The profiling engine 225-1can also be configured to distinguish and/or identify client devices 130 across sessions and browsers based on information derived from, but not limited to, tracking sessions with a designated session cookie holding identifying information (e.g., an identity of the client device 130, an identity of a user, session information for the cloud-based application 115, etc.), JavaScript injections to webpages, cross-browser storage to link sessions managed from different browsers on the same client device 130, and/or the database 150. Such identification may be used to, e.g., determine which profiling and/or organizational information to utilize when computing risk scores.

The identification and profiling tasks performed by the profiling engine 225-1 may be result in a new or an update user profile. The management of user profiles including updates and creations of user profile may be performed by the user-profile manager 230.

The threat detector 220 may construct a supervised learning model for security alerts. To this end, the threat detector 220 can collect feedback on alerts; engage IT personnel (e.g., a system administrator, a security officer, etc.) in an IT department assigned to the cloud computing platform 110 and/or the user requesting access; and dynamically build a user profile by querying the user of suspicious patterns. In an embodiment, engaging the IT personnel includes sending alerts by a communication means such as, but not limited to, email, instant messaging, phone, or other communicative means.

In an embodiment, the risk score may be increased if risk factors are determined to be highly anomalous. A risk factor may be determined to be highly anomalous due to, for example, an anomalous location of the user accessing a cloud-based application 115; an anomalous ISP through which the connection from the client device 130 to the platform 110 is achieved; an anomalous user-agent installed in the client device 130 of the user accessing the cloud-based application 115; anomalous actions performed by the user; simultaneous access by the user to a cloud-based application 115 from different locations; a request to perform an administrative action; access to the cloud-based application by the user as an administrator; a current time of the request being over a predefined time period since a last login by the user; specific number of anomalous actions performed during a predefined time interval, and a use of an anomalous proxy or internet protocol (IP) address to access the cloud-based application. In an embodiment, the user profile of the user may indicate that the risk factor activity is highly anomalous.

In an embodiment, an alert may be generated in response to computation of a risk score above a predefined threshold. Each alert may be assigned a severity score indicating a potential degree of harm that the suspicious or anomalous activity can be associated with. The probability of an alert being generated, and the severity score assigned to the alert, may be based on, e.g., the determined anomalous risk factors.

As a non-limiting example, an attacker accesses a corporate cloud-based application using stolen user credentials. When the attacker requests access to the cloud-based application, the secured gateway 210 is configured to extract application-layer parameters including, for example, a type of the client device used by the attacker, the location of the client device, the actions requested by the attacker, the identity associated with the credentials (e.g., credentials of a legit user), and the time access was requested. In an embodiment, network-layer parameters can be extracted as well and can be used to identify the secured gateway. For example, network bandwidth used by the attacker during the access may be used to identify the secured gateway.

The extracted parameters are processed by the threat detector 220. The threat detector 220 is configured to compare the extracted parameters for a current session to parameters (or a user profile) stored from previous user sessions.

For example, comparing the parameters may indicate that actions requested in the current session differ from those requested during the previous user sessions. The threat detector 220 is configured to compute, based on the extracted parameters and comparison's results, a risk score demonstrating a significant risk. Accordingly, the threat detector 220 is configured to identify a threat respective of the access to the cloud-based application made by the client device 130 and generate an alert respective thereof.

As another example, an authorized user acts as a "rough insider" (i.e., the authorized user performs malicious and/or unsecured actions within the cloud computing platform 110 or an application 115). When the user requests access to the cloud, the secured gateway 210 is configured to extract application-layer parameters regarding the client device used by the authorized user. Examples for such parameters are discussed above. The extracted parameters are provided to the threat detector 220.

The threat detector 220 is configured to compare the extracted parameters of a current session to parameters (or a user profile) from previous user sessions and to information stored in a user profile built based on previous user activity. In this example, the threat detector 220 determines that the access to the cloud-based application is performed from a geographical location that was not identified in previous user sessions. Additionally, the time of access is determined to be outside of normal business hours. Thus, it is determined that the user activity may be anomalous.

The threat detector 220 notes that the user has performed a highly anomalous action by performing administrative actions. Respective of this highly anomalous determination, the computed risk score is increased and the threat detector 220 generates an alert. The alert indicates that highly anomalous activity has occurred and, as such, indicates that the severity of the alert is high.

In an embodiment, the threat detector 220 may further be configured to update a previously generated alert based on newly detected activity (e.g., a subsequent access to the cloud). When an alert has been generated and new activity is detected, additional risk factors may be identified and a new risk score may be computed based on the additional risk factors and the risk factors from the previously generated alert. In a further embodiment, the previously generated alert may be updated if the additional risk factors increase the severity of the alert (e.g., from "low" to "medium," from "low" to "high," from "medium" to "high," and so on).

As a non-limiting example of updating an alert, anomalous is detected. Based on a risk score computed for the anomalous activity, a "low" severity alert is generated. Upon detecting further anomalous activity, another risk score is computed. Based on the other risk score, it is determined that the severity of the alert has increased. As a result, a "medium" severity alert is generated.

It should be noted that a managed network proxy 120 is described herein above with respect to Figs. 1 and 2 merely for simplicity purposes and without limitation on the disclosed embodiments. In an embodiment, a similarly configured application program interface (API) may be utilized instead of the managed network proxy 120. In a further embodiment, the API may generate and/or deliver an alert but may not block or otherwise directly prevent the access. It should be further noted that each, some or all of the elements of the threat detector 220 may be realized by a processing unit, examples of which are provided above.

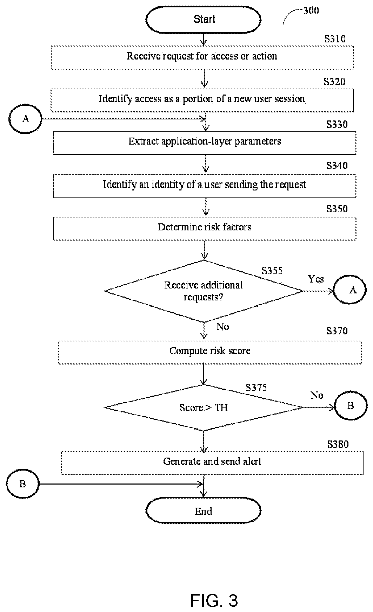

Fig. 3 is an exemplary and non-limiting flowchart 300 illustrating a method for detecting and analyzing cyber-threats in cloud-based applications according to an embodiment. In an embodiment, the method may be performed by a managed network proxy (e.g., the managed network proxy 120) and/or by an API. The cyber-threats that can be detected include, but are not limited to, an access to the cloud-based application using stolen user's credentials, a rough insider leaking data from the cloud-based application, and an access attempt to the cloud-based application using common credentials.

At S310, a request for access to a cloud-based application or to perform an action in a cloud-based application hosted in a cloud computing platform is received. The request is an application-layer request (i.e., a request sent by means of an application-layer protocol). At S320, the access is identified as a portion of a new user session. A session may be, for example, a sequence of actions performed by a single user during an uninterrupted period of activity by that user.

At S330, at least application-layer parameters are extracted from the received request. The application-layer parameters may be related to the client device, a user of the client device, session identifiers, and so on. Examples for application-layer parameters are provided above. In certain embodiments, network layer parameters can be extracted as well. The network layer parameters may include, for example, bandwidth, a connection type, source/destination IP addresses, and so on.

At S340, based on the request and the extracted parameters, the current user accessing the cloud-based application is identified. In an embodiment, S340 may further include identifying an organization and/or department which the current user belongs to and/or a user device from which the current user sent the request. In certain embodiments, S340 includes profiling the identified user. Identification and profiling of a user are discussed in greater detail above.

At S350, any or all of the extracted application-layer parameters from the current session are compared to application-layer parameters gathered from previous sessions to determine one or more risk factors. The parameters of the previous sessions may be obtained from a user profile associated with the user of the client device. The parameters of the previous sessions may be gathered when the user accessed or performed actions in a particular cloud-based application or across multiple cloud-based applications. Alternatively or collectively, the parameters of the previous sessions may be gathered when a group of users (belonging to a certain organization or a department) accessed or performed actions in a particular cloud-application or across multiple cloud-applications.

The risk factors are determined based, in part, on anomalous operations performed by the user accessing the cloud-application during the current session. Detecting risk factors and anomalous operations are described further herein above with respect to Fig. 2. It should be noted, without limiting the disclosed embodiments, that S340 and S350 can be performed in parallel.

At S360, it is checked if additional requests have been received from the client device during the current session. If so, execution returns to S330 where parameters related to a newly received request are extracted; otherwise, execution proceeds with S370.

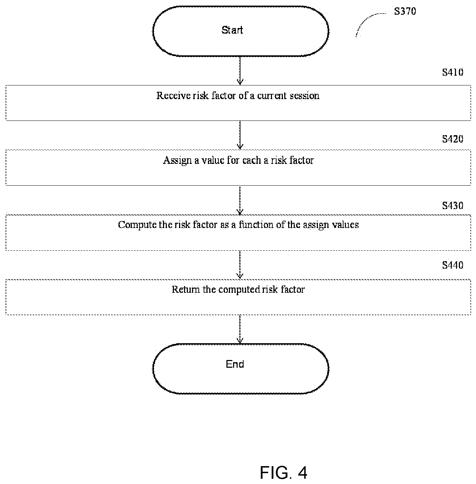

At S370, a risk score for the current session is computed respective of the determined risk factors. A risk score represents a likelihood that the access attempt and/or actions performed during the current session presents a cyber threat. For example, an attacker attempts to access a cloud-based application's account using common passwords would involve many failed login attempt during a session will be determined as a risk factor. A risk score would be computed based on the determined failed login risk factors. Computation of risk scores is discussed further herein below with respect to Fig. 4.

At S375, it is determined whether the risk score is above a predefined threshold (TH) and, if so, execution continues with S380; otherwise, execution terminates.

At S380, a mitigation action is performed. Such action may include generating and sending alerts, blocking access to the cloud-based application from a certain IP address(es), blocking access to the cloud-based application from a specific geographical location, forcing a secondary authentication (e.g., using CAPTCHA, authentication via email, etc.), and the like. The action to be taken may be determined based on the value of the risk score and/or a probability that the detected action is a cyber threat, each of which may be determined based on the risk score.

In an embodiment, the generated alert may be updated based on newly detected activity (e.g., a subsequent access to the cloud). When the new activity is detected, additional risk factors may be identified and a new risk score may be computed based on the additional risk factors and the risk factors from the generated alert. In a further embodiment, the generated alert may be updated if the additional risk factors increase the severity of the alert (e.g., from "low" to "medium," from "low" to "high," from "medium" to "high," and so on).

Fig. 4 is an exemplary and non-limiting flowchart S370 illustrating a method for computing a risk score according to an embodiment. At S410, the risk factors determined during a current session are received. Examples for risk factors include an unusual location for a user or organization; an unusual ISP for a user or organization; an unusual IP address for a user or organization; an unusual user-agent for a user; unusual actions performed by a user; simultaneous access by a single user to the cloud-based application from different locations; a user performing administrative actions; the user acting as an administrator; passage of a particular amount of time since the user's last login; and the unique features existing in a user's history as compared to other users in an organization. Such unique features may be, e.g., unique locations and/or IP addresses.

At S420, each determined risk factor is assigned a value. As a non-limiting example, the value may be a numeric value (e.g., an integer number), a Boolean value, and the like. In an embodiment, the value is assigned based on the severity of the risk factor. For example, a "user acting as an administrator" risk factor may be assigned with a higher value than "an unusual ISP for a user."

At S430, the risk score is computed over the values assigned to each of the determined risk factors. The risk score represents a likelihood that the access attempt presents a cyber threat. For example, the risk score may be computed as a sum, a weighted sum, and the like of the assigned value. As another embodiment, the risk score may be computed as a Boolean sum, where a '1' value may represent a risk and a '0' value does not. In yet another example, the risk score is a function of the number of risk factors being detected.

In yet another embodiment, the computation of the risk score may include a statistical analysis performed by, for example, a statistical anomaly engine to compute a threat probability based on the determined risk factors. The threat probability would serve as the risk score. At S440, the computed risk score is returned.

The various embodiments disclosed herein can be implemented as hardware, firmware, software, or any combination thereof. Moreover, the software is preferably implemented as an application program tangibly embodied on a program storage unit or computer readable medium consisting of parts, or of certain devices and/or a combination of devices. The application program may be uploaded to, and executed by, a machine comprising any suitable architecture. Preferably, the machine is implemented on a computer platform having hardware such as one or more central processing units ("CPUs"), a memory, and input/output interfaces. The computer platform may also include an operating system and microinstruction code. The various processes and functions described herein may be either part of the microinstruction code or part of the application program, or any combination thereof, which may be executed by a CPU, whether or not such a computer or processor is explicitly shown. In addition, various other peripheral units may be connected to the computer platform such as an additional data storage unit and a printing unit. Furthermore, a non-transitory computer readable medium is any computer readable medium except for a transitory propagating signal.

All examples and conditional language recited herein are intended for pedagogical purposes to aid the reader in understanding the principles of the disclosed embodiments and the concepts contributed by the inventor to furthering the art, and are to be construed as being without limitation to such specifically recited examples and conditions. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

## Claims

1. A method (300) for detecting cyber threats against a cloud-based application, comprising:
receiving (S310) a request from a client device, the request directed to a cloud-based application computing platform, wherein the client device is associated with a user attempting to access the cloud-based application;
determining whether the received request belongs to a current session of the client device accessing the cloud-based application;
extracting (S330), from the received request, at least one application-layer parameter of the current session;
comparing (S350) the at least one extracted application-layer parameter to application-layer parameters extracted from previous sessions to determine at least one risk factor, wherein the application-layer parameters from the previous sessions are obtained from a user profile associated with the user of the client device and are gathered when the user accessed or performed actions in a particular cloud-based application or across multiple cloud-based applications; and
computing (S370) a risk score based on the determined at least one risk factor, wherein the risk score is indicative of a potential cyber threat.

2. The method according to claim 1, further comprising:
Identifying (S340), based on the at least one extracted application-layer parameter, an identity of the user attempting to access the cloud-based application.

3. The method according to claims 1 or 2, wherein the application-layer parameters extracted from previous sessions are from previous sessions across a plurality of cloud-based applications accessed by the user.

4. The method according to claim 1, wherein the current session is a sequence of cloud-based application actions performed by the user during an uninterrupted period of activity by the user.

5. The method according to claim 1, wherein comparing (S350) the at least one extracted application-layer parameter to application-layer parameters extracted from previous sessions to determine the at least one risk factor further comprises:
detecting, based on the comparison, at least one anomalous operation performed by the user; and
associating the at least one anomalous operation with the at least one risk factor.

6. The method according to claim 1, wherein the at least one risk factor includes any one of: an anomalous location of the user accessing the cloud-based application; an anomalous ISP; an anomalous user-agent installed in a client device of the user accessing the cloud-based application; anomalous actions performed by the user; simultaneous access by the user to the cloud-based application from different locations; a request to perform an administrative action; access to the cloud-based application by the user as an administrator; a current time of the request being over a predefined time period since a last login by the user; specific number of anomalous actions performed during a predefined time interval, and a use of an anomalous proxy or internet protocol (IP) address to access the cloud-based application.

7. The method according to claim 1, wherein computing (S370) the risk score further comprises:
assigning a value to each of the at least one determined risk factor, wherein each assigned value is based on the severity of the respective determined risk factor; and
computing the risk score as a function of the at least one assigned value.

8. The method according to claim 1, further comprising:
comparing the computed risk score to at least one predefined threshold; and
selecting a mitigation action based on the value of the risk score, when (S375) the computed risk score is above any of the at least one predefined threshold; and
performing (S380) the mitigation action to mitigate the potential cyber threat.

9. The method according to claim 1, wherein the potential cyber threat includes at least one of: accessing the cloud-based application using stolen user credentials; a rough insider leaking data from the cloud-based application; and access to the cloud-based application using common credentials.

10. A computer program comprising code portions which, when executed on a processing system, cause the processing system to carry out the method of any of the preceding claims.

11. A proxy device for detecting cyber threats against a cloud-based application, comprising:
a processing system; and
a memory, the memory containing instructions that, when executed by the processor, configure the proxy device to:
receive (S310) a request from a client device to a cloud-based application computing platform, wherein the client device is associated with a user attempting to access the cloud-based application;
determine whether the received request belongs to a current session of the client device accessing the cloud-based application;
extract (S330), from the received request, at least one application-layer parameter of the current session;
compare (S350) the at least one extracted application-layer parameter to application-layer parameters extracted from previous sessions to determine at least one risk factor, wherein the application-layer parameters from the previous sessions are obtained from a user profile associated with the user of the client device and are gathered when the user accessed or performed actions in a particular cloud-based application or across multiple cloud-based applications; and
compute (S370) a risk score based on the determined at least one risk factor, wherein the risk score is indicative of a potential cyber threat.

12. A cloud computing platform, comprising:
at least one server configured to host at least one cloud-based application; and
a device communicatively connected to the at least one server, wherein the device includes a processor; and a memory, the memory containing instructions that, when executed by the processing system, configure the device to detect cyber threats against a cloud-based application, wherein the device is further configured to:
receive (S310) a request from a client device to a cloud-based application computing platform, wherein the client device is associated with a user attempting to access the cloud-based application;
determine whether the received request belongs to a current session of the at least one client device accessing the cloud-based application;
extract (S330), from the received request, at least one application-layer parameter of the current session;
compare (S350) the at least one extracted application-layer parameter to application-layer parameters extracted from previous sessions to determine at least one risk factor, wherein the application-layer parameters from the previous sessions are obtained from a user profile associated with the user of the client device and are gathered when the user accessed or performed actions in a particular cloud-based application or across multiple cloud-based applications; and
compute (S370) a risk score based on the determined at least one risk factor, wherein the risk score is indicative of a potential cyber threat.

## Patentansprüche

1. Verfahren (300) zum Erfassen von Cyberbedrohungen gegen eine cloudbasierte Anwendung, umfassend:
Empfangen (S310) einer Anforderung von einem Clientgerät, wobei die Anforderung an eine Computerplattform für eine cloudbasierte Anwendung gerichtet ist, wobei das Clientgerät mit einem Benutzer verknüpft ist, der versucht, auf die cloudbasierte Anwendung zuzugreifen;
Bestimmen, ob die empfangene Anforderung zu einer laufenden Sitzung des auf die cloudbasierte Anwendung zugreifenden Clientgeräts gehört;
Extrahieren (S330) von wenigstens einem Anwendungsschichtparameter der laufenden Sitzung aus der empfangenen Anforderung;
Vergleichen (S350) des wenigstens einen extrahierten Anwendungsschichtparameters mit von vorhergehenden Sitzungen extrahierten Anwendungsschichtparametern zum Bestimmen von wenigstens einem Risikofaktor, wobei die Anwendungsschichtparameter von den vorhergehenden Sitzungen von einem mit dem Benutzer des Clientgeräts verknüpften Benutzerprofil erhalten werden und gesammelt werden, wenn der Benutzer auf eine bestimmte cloudbasierte Anwendung oder über mehrere cloudbasierte Anwendungen hinweg zugegriffen oder Aktionen in dieser/diesen ausgeführt hat; und
Berechnen (S370) einer Risikobewertung auf der Basis des bestimmten wenigstens einen Risikofaktors, wobei die Risikobewertung eine potentielle Cyberbedrohung angibt.

2. Verfahren nach Anspruch 1, ferner umfassend:
Identifizieren (S340) einer Identität des Benutzers, der versucht, auf die cloudbasierte Anwendung zuzugreifen, auf der Basis von dem wenigstens einen extrahierten Anwendungsschichtparameter.

3. Verfahren nach Anspruch 1 oder 2, wobei die von vorhergehenden Sitzungen extrahierten Anwendungsschichtparameter von vorhergehenden Sitzungen über eine Vielzahl von cloudbasierten Anwendungen, auf die vom Benutzer zugegriffen wird, hinweg stammen.

4. Verfahren nach Anspruch 1, wobei die laufende Sitzung eine Sequenz von vom Benutzer während eines ununterbrochenen Zeitraums von Aktivität durch den Benutzer durchgeführten Aktionen einer cloudbasierten Anwendung ist.

5. Verfahren nach Anspruch 1, wobei das Vergleichen (S350) des wenigstens einen extrahierten Anwendungsschichtparameters mit von vorhergehenden Sitzungen extrahierten Anwendungsschichtparametern zum Bestimmen des wenigstens einen Risikofaktors ferner umfasst:
Erfassen von wenigstens einer vom Benutzer ausgeführten anomalen Operation auf der Basis des Vergleichs; und
Verknüpfen der wenigstens einen anomalen Operation mit dem wenigstens einen Risikofaktor.

6. Verfahren nach Anspruch 1, wobei der wenigstens eine Risikofaktor ein beliebiges Element umfasst der Gruppe umfassend: einen anomalen Ort des auf die cloudbasierte Anwendung zugreifenden Benutzers; einen anomalen ISP; einen in einem Clientgerät des auf die cloudbasierte Anwendung zugreifenden Benutzers installierten anomalen Benutzeragenten; vom Benutzer ausgeführte anomale Aktionen; simultanen Zugriff vom Benutzer auf die cloudbasierte Anwendung von verschiedenen Orten; eine Anforderung zum Ausführen einer administrativen Aktion; Zugreifen auf die cloudbasierte Anwendung durch den Benutzer als ein Administrator; Überschreiten eines definierten Zeitraums durch eine aktuelle Zeit der Anforderung seit einer letzten Anmeldung durch den Benutzer; eine spezifische Zahl von während eines vordefinierten Zeitintervalls ausgeführten anomalen Aktionen und eine Verwendung einer anomalen Proxy- oder Internet-Protocol-(IP-)Adresse zum Zugreifen auf die cloudbasierte Anwendung.

7. Verfahren nach Anspruch 1, wobei das das Berechnen (S370) der Risikobewertung ferner umfasst:
Zuweisen eines Werts zu jedem des wenigstens einen bestimmten Risikofaktors, wobei jeder zugewiesene Wert auf der Schwere des jeweiligen bestimmten Risikofaktors basiert; und
Berechnen der Risikobewertung als eine Funktion des wenigstens einen zugewiesenen Werts.

8. Verfahren nach Anspruch 1, ferner umfassend:
Vergleichen der berechneten Risikobewertung mit wenigstens einer vordefinierten Schwelle; und
Auswählen einer Entschärfungsaktion auf der Basis des Werts der Risikobewertung, wenn (S375) die berechnete Risikobewertung über einer der wenigstens einen vordefinierten Schwelle liegt; und Durchführen (S380) der Entschärfungsaktion zum Entschärfen der potentiellen Cyberbedrohung.

9. Verfahren nach Anspruch 1, wobei die potentielle Cyberbedrohung wenigstens ein Element umfasst der Gruppe umfassend: Zugreifen auf die cloudbasierte Anwendung unter Verwendung von gestohlenen Benutzeranmeldeinformationen; ein schweres Insider-Datenleck von der cloudbasierten Anwendung; und ein Zugriff auf die cloudbasierte Anwendung unter Verwendung von gemeinsamen Anmeldeinformationen.

10. Computerprogramm umfassend Codeabschnitte, die, wenn auf einem Verarbeitungssystem ausgeführt, das Verarbeitungssystem zum Ausführen des Verfahrens nach einem der vorhergehenden Ansprüche veranlassen.

11. Proxy-Vorrichtung zum Erfassen von Cyberbedrohungen gegen eine cloudbasierte Anwendung, umfassend:
ein Verarbeitungssystem; und
einen Speicher, wobei der Speicher Anweisungen enthält, die, wenn vom Prozessor ausgeführt, die Proxy-Vorrichtung konfigurieren zum:
Empfangen (S310) einer Anforderung von einem Clientgerät an eine Computerplattform für eine cloudbasierte Anwendung, wobei das Clientgerät mit einem Benutzer verknüpft ist, der versucht, auf die cloudbasierte Anwendung zuzugreifen;
Bestimmen, ob die empfangene Anforderung zu einer laufenden Sitzung des auf cloudbasierte Anwendung zugreifenden Clientgeräts gehört;
Extrahieren (S330) von wenigstens einem Anwendungsschichtparameter der laufenden Sitzung aus der empfangenen Anforderung;
Vergleichen (S350) des wenigstens einen extrahierten Anwendungsschichtparameters mit von vorhergehenden Sitzungen extrahierten Anwendungsschichtparametern zum Bestimmen von wenigstens einem Risikofaktor, wobei die Anwendungsschichtparameter von den vorhergehenden Sitzungen von einem mit dem Benutzer des Clientgeräts verknüpften Benutzerprofil erhalten werden und gesammelt werden, wenn der Benutzer auf eine bestimmte cloudbasierte Anwendung oder über mehrere cloudbasierte Anwendungen hinweg zugegriffen oder Aktionen in dieser/diesen ausgeführt hat; und
Berechnen (S370) einer Risikobewertung auf der Basis des bestimmten wenigstens einen Risikofaktors, wobei die Risikobewertung eine potentielle Cyberbedrohung angibt.

12. Cloud-Computerplattform, umfassend:
wenigstens einen zum Hosten von wenigstens einer cloudbasierten Anwendung konfigurierten Server; und
eine kommunizierend mit dem wenigstens einen Server verbundene Vorrichtung, wobei die Vorrichtung einen Prozessor; und einen Speicher umfasst, wobei der Speicher Anweisungen umfasst, die, wenn vom Verarbeitungssystem ausgeführt, die Vorrichtung zum Erfassen von Cyberbedrohungen gegen eine cloudbasierte Anwendung konfigurieren, wobei die Vorrichtung ferner konfiguriert ist zum:
Empfangen (S310) einer Anforderung von einem Clientgerät an eine Computerplattform für eine cloudbasierte Anwendung, wobei das Clientgerät mit einem Benutzer verknüpft ist, der versucht, auf die cloudbasierte Anwendung zuzugreifen;
Bestimmen, ob die empfangene Anforderung zu einer laufenden Sitzung des wenigstens einen auf cloudbasierte Anwendung zugreifenden Clientgeräts gehört;
Extrahieren (S330) von wenigstens einem Anwendungsschichtparameter der laufenden Sitzung aus der empfangenen Anforderung;
Vergleichen (S350) des wenigstens einen extrahierten Anwendungsschichtparameters mit von vorhergehenden Sitzungen extrahierten Anwendungsschichtparametern zum Bestimmen von wenigstens einem Risikofaktor, wobei die Anwendungsschichtparameter von den vorhergehenden Sitzungen von einem mit dem Benutzer des Clientgeräts verknüpften Benutzerprofil erhalten werden und gesammelt werden, wenn der Benutzer auf eine bestimmte cloudbasierte Anwendung oder über mehrere cloudbasierte Anwendungen hinweg zugegriffen oder Aktionen in dieser/diesen ausgeführt hat; und
Berechnen (S370) einer Risikobewertung auf der Basis des bestimmten wenigstens einen Risikofaktors, wobei die Risikobewertung eine potentielle Cyberbedrohung angibt.

## Revendications

1. Procédé (300) permettant de détecter des cyber-menaces dirigées contre une application d'informatique en nuage, comprenant :
la réception (S310) d'une requête provenant d'un dispositif client, la requête étant dirigée vers une plate-forme informatique d'applications d'informatique en nuage, le dispositif client étant associé à un utilisateur tentant d'accéder à l'application d'informatique en nuage,
la détermination de ce que la requête reçue appartient à la session courante du dispositif client qui accède à l'application d'informatique en nuage,
l'extraction (S330) d'au moins un paramètre de couche d'application de la session courante à partir de la requête reçue,
la comparaison (S350) du ou des paramètres de couche d'application extraits à des paramètres de couche d'application extraits de sessions précédentes dans le but de déterminer au moins un facteur de risque, les paramètres de couche d'application provenant des sessions précédentes étant obtenus à partir d'un profil utilisateur associé à l'utilisateur du dispositif client et étant regroupés lorsque l'utilisateur a accédé à des actions dans une application particulière d'informatique en nuage ou dans un ensemble de multiples applications d'informatique en nuage ou bien a exécuté celles-ci, et
le calcul (S370) d'une note de risque fondée sur le ou les facteurs de risque déterminés, la note de risque étant indicative d'une cyber-menace potentielle.

2. Procédé selon la revendication 1, comprenant en outre :
l'identification (S340) d'une identité de l'utilisateur tentant d'accéder à l'application d'informatique en nuage sur la base du ou des paramètres de couche d'application extraits.

3. Procédé selon les revendications 1 ou 2, dans lequel les paramètres de couche d'application extraits des sessions précédentes proviennent de sessions précédentes sur un ensemble d'une pluralité d'applications d'informatique en nuage auxquelles accède l'utilisateur.

4. Procédé selon la revendication 1, dans lequel la session courante est une séquence d'actions d'application d'informatique en nuage effectuées par l'utilisateur pendant une période ininterrompue d'activité de l'utilisateur.

5. Procédé selon la revendication 1, dans lequel la comparaison (S350) du ou des paramètres extraits de couche d'application à des paramètres de couche d'application extraits de sessions précédentes pour déterminer le ou les facteurs de risque comprend en outre :
la détection, sur la base de la comparaison, d'au moins une opération anormale effectuée par l'utilisateur, et
l'association de la ou des opérations anormales avec le ou les facteurs de risque.

6. Procédé selon la revendication 1, dans lequel le ou les facteurs de risque incluent un élément quelconque parmi : un emplacement anormal de l'utilisateur qui accède à l'application d'informatique en nuage, un fournisseur ISP anormal, un agent utilisateur anormal installé dans un dispositif client de l'utilisateur qui accède à l'application d'informatique en nuage, des actions anormales effectuées par l'utilisateur, un accès simultané à l'application d'informatique en nuage effectué par l'utilisateur à partir de différents emplacements, une requête d'exécution d'une action administrative, un accès à l'application informatique en nuage par l'utilisateur en tant qu'administrateur, le temps courant de la requête se trouvant au-delà d'une période prédéfinie depuis la dernière entrée en session de l'utilisateur, un nombre spécifique d'actions anormales effectuées pendant un intervalle de temps prédéfini et l'utilisation d'un serveur mandataire ou d'une adresse au protocole Internet (IP) anormaux pour accéder à l'application d'informatique en nuage.

7. Procédé selon la revendication 1, dans lequel le calcul (S370) de la note de risque comprend en outre :
l'assignation d'une valeur à chacun du ou des facteurs de risque déterminés, chaque valeur assignée étant fondée sur la sévérité du facteur de risque respectif déterminé, et
le calcul de la note de risque comme fonction de la ou des valeurs assignées.

8. Procédé selon la revendication 1, comprenant en outre :
la comparaison de la note de risque calculée à au moins un seuil prédéfini, et
la sélection d'une action d'atténuation fondée sur la valeur de la note de risque lorsque (S375) la note de risque calculée se trouve au-dessus de l'un quelconque du ou des seuils prédéfinis, et
l'exécution (S380) de l'action d'atténuation dans le but de limiter la cyber-menace potentielle.

9. Procédé selon la revendication 1, dans lequel la cyber-menace potentielle inclut au moins une action parmi : l'accès à l'application d'informatique en nuage en utilisant des références utilisateur dérobées, un élément interne mauvais laissant fuir des données de l'application d'informatique en nuage et un accès à l'application d'informatique en nuage en utilisant des références communes.

10. Programme informatique comprenant des parties de code qui, lorsqu'elles sont exécutées sur un système de traitement, amènent le système de traitement à exécuter le procédé conforme à l'une quelconque des revendications précédentes.

11. Dispositif serveur mandataire destiné à détecter des cyber-menaces dirigées contre une application d'informatique en nuage, comprenant :
un système de traitement, et
une mémoire, la mémoire contenant des instructions qui, lorsqu'elles sont exécutées par le processeur, configurent le dispositif serveur mandataire pour :
recevoir (S310) une requête provenant d'un dispositif client destinée à une plate-forme informatique d'applications d'informatique en nuage, le dispositif client étant associé à un utilisateur tentant d'accéder à l'application d'informatique en nuage,
déterminer si la requête reçue appartient à la session courante du dispositif client qui accède à l'application d'informatique en nuage,
extraire (S330) au moins un paramètre de couche d'application de la session courante à partir de la requête reçue,
comparer (S350) le ou les paramètres de couche d'application extraits à des paramètres de couche d'application extraits de sessions précédentes dans le but de déterminer au moins un facteur de risque, les paramètres de couche d'application provenant des sessions précédentes étant obtenus à partir d'un profil utilisateur associé à l'utilisateur du dispositif client et étant regroupés lorsque l'utilisateur a accédé à des actions dans une application particulière d'informatique en nuage ou dans un ensemble de multiples applications d'informatique en nuage ou bien a exécuté celles-ci, et
calculer (S370) une note de risque fondée sur le ou les facteurs de risque déterminés, la note de risque étant indicative d'une cyber-menace potentielle.

12. Plate-forme d'informatique en nuage, comprenant :
au moins un serveur configuré pour héberger une application d'informatique en nuage, et
un dispositif relié par communication à ce ou à ces serveurs, le dispositif incluant un processeur et une mémoire, la mémoire contenant des instructions qui, lorsqu'elles sont exécutées par le système de traitement, configurent le dispositif pour qu'il détecte des cyber-menaces dirigées contre une application d'informatique en nuage, le dispositif étant en outre configuré pour :
recevoir (S310) une requête provenant d'un dispositif client destinée à une plate-forme informatique d'applications d'informatique en nuage, le dispositif client étant associé à un utilisateur tentant d'accéder à l'application d'informatique en nuage,
déterminer si la requête reçue appartient à la session courante du ou des dispositifs client qui accèdent à l'application d'informatique en nuage,
extraire (S330) au moins un paramètre de couche d'application de la session courante à partir de la requête reçue,
comparer (S350) le ou les paramètres de couche d'application extraits à des paramètres de couche d'application extraits de sessions précédentes dans le but de déterminer au moins un facteur de risque, les paramètres de couche d'application provenant des sessions précédentes étant obtenus à partir d'un profil utilisateur associé à l'utilisateur du dispositif client et étant regroupés lorsque l'utilisateur a accédé à des actions dans une application particulière d'informatique en nuage ou dans un ensemble de multiples applications d'informatique en nuage ou bien a exécuté celles-ci, et
calculer (S370) une note de risque fondée sur le ou les facteurs de risque déterminés, la note de risque étant indicative d'une cyber-menace potentielle.
